# EUROPEAN PATENT SPECIFICATION

(11) **EP 4 047 521 B1**
(45) Date of publication and mention of the grant of the patent: **20.12.2023**
(21) Application number: 21158700.1
(22) Date of filing: 23.02.2021
(51) Int. Cl.: G06K 19/07, G06K 19/04, H01Q 1/14, H01R 31/00, G06K 19/06

(54) **ELECTRICAL CONNECTOR PROVIDED WITH A DEVICE FOR REMOTE DETECTION OF THE STATE OF THE ELECTRICAL CONNECTOR, AND A SYSTEM AND A METHOD FOR IDENTIFYING, AND CHECKING THE STATUS OF, A PLURALITY OF ELECTRICAL CONNECTORS**
ELEKTRISCHER VERBINDER MIT EINER VORRICHTUNG ZUR FERNERFASSUNG DES ZUSTANDES DES ELEKTRISCHEN VERBINDERS UND SYSTEM UND VERFAHREN ZUR IDENTIFIZIERUNG UND ÜBERPRÜFUNG DES ZUSTANDES VON MEHREREN ELEKTRISCHEN VERBINDERN
CONNECTEUR ÉLECTRIQUE DOTÉ D'UN DISPOSITIF DE DÉTECTION À DISTANCE DE L'ÉTAT DU CONNECTEUR ÉLECTRIQUE, ET SYSTÈME ET PROCÉDÉ D'IDENTIFICATION ET DE VÉRIFICATION DE L'ÉTAT D'UNE PLURALITÉ DE CONNECTEURS ÉLECTRIQUES

(43) Date of publication of application: 24.08.2022
(73) Proprietor: C.R.F. Società Consortile per Azioni, 10043 Orbassano (Torino) (IT)
(72) Inventor: CACCIATORE, Alessandro, 10043 Orbassano (Torino) (IT); CISI, Alessandro, 10043 Orbassano (Torino) (IT); PASQUETTAZ, Giorgio, 10043 Orbassano (Torino) (IT); NEPA, Paolo, 56122 Pisa (IT); MICHEL, Andrea, 56122 Pisa (IT); CIRCOSTA, Alfredo, 10135 Torino (IT)
(74) Representative: Notaro, Giancarlo

(56) References cited:
- WO-A1-2006/063023
- WO-A1-2010/024848
- US-A1- 2014 138 431
- US-B1- 7 468 669

## Description

### Field of the invention

The present invention relates to an electrical connector provided with a device for remote detection of the state of the electrical connector, as well as a system and a method for identifying, and checking the status of, a plurality of electrical connectors.

The invention relates - in particular - to an electrical connector of the type comprising a first connector element and a second connector element, having respective housings with respective electrical contacts, which can be mutually coupled, and an RFID circuit associated with the first connector element and including an antenna and an integrated circuit configured to receive a signal by means of the antenna and to output a signal indicative of an open state or a closed state of the electrical connector corresponding, respectively, to an uncoupled condition and to a correctly coupled condition of the two connector elements.

### Prior art

An electrical connector of the type indicated above is described in document US 9 711 903 B2**.** In this known solution, the antenna arranged on a first connector element has a break. When the two connector elements are correctly coupled, a connecting bridge carried by the other connector element covers the break in the antenna, so that the RFID circuit is able to operate in the required manner. The drawback of this solution is that the reader device that interacts with the RFID circuit receives a response only if the two connector elements are correctly coupled. The absence of a response is interpreted as the absence of a proper coupled condition. However, this approach may lead to detection of false anomalies, since the absence of a response signal may be due to a series of additional uncontrollable factors.

A device of the type indicated above is also known from document US 7 854 623 B2**.** According to the general concept presented in this document, at least one RFID circuit is provided, which is only able to communicate with a reader device when the two elements of the connector are correctly coupled together, which gives rise to the same drawbacks that have been mentioned above. In a preferred embodiment, the solution illustrated in this document has two RFID circuits configured in such a way that one of them is able to communicate with the reader device only in the coupled condition of the two connector elements, while the other is only able to communicate with the reader device only in the uncoupled condition of the two connector elements. In the case of this embodiment, therefore, the reader device always receives a response from one of the two RFID circuits, which avoids the risk of detection of false anomalies, but at the same time involves the complication of providing two RFID circuits on one of the two connector elements, and arranging two electrical connection elements on the other connector element configured to cooperate with the two RFID circuits in the coupled condition of the two connector elements.

**An electrical connector according to the preamble of claim 1 is known from** WO 2010/024848 A1 **and also from** US 7 468 669 B1**.**

### Object of the invention

The object of the present invention is to overcome the drawbacks of the prior art and to enable the status of an electrical connector to be remotely detected in a reliable manner and with simple and low-cost means.

An additional object of the invention is to enable simple and quick operations to be performed for checking the status of a plurality of electrical connectors which are being installed on a motor-vehicle in a motor-vehicle production line, by receiving a signal from each electrical connector at a remote position, each signal identifying an electrical connector and containing information on the open or closed state of the electrical connector.

### Summary of the invention

In view of achieving one or more of the aforesaid objects, the invention relates to an electrical connector having the characteristics **of claim 1.**

The invention also relates to a system for controlling the correct coupling of a plurality of electrical connectors in an assembly station of a motor-vehicle production line, comprising an assembly station along said production line, wherein a plurality of electrical connectors are installed, each electrical connector being configured according to the teachings of the present invention, as well as at least one reader unit configured to send an input signal to the RFID circuit antenna of each of said electrical connectors, and to receive a signal from the RFID circuit antenna of each electrical connector, containing an identification code of the connector and an information on the open or closed state of the connector.

Preferably, an electronic processing unit configured to store - in a database - information contained in the signals received by said at least one reader unit, is associated with said at least one reader unit, for subsequent processing.

The invention also relates to the control method which can be carried out by means of the system described above.

Further characteristics and advantages of the invention will become apparent from the description that follows with reference to the attached drawings, provided purely by way of non-limiting example, wherein:
- Figure 1 is a perspective view of a first embodiment **not forming part of the present invention,** wherein the two connector elements constituting the electrical connector according to the invention are illustrated in the uncoupled condition,
- Figure 2 is a variant of Figure 1, **showing** a second embodiment **in accordance with** the invention,
- Figure 3 is a plan view, on an enlarged scale, of a detail of Figure 2,
- Figures 4, 5 are cross-sectional views of Figure 2 showing the condition of open connector and closed connector, respectively, and
   Figure 6 is a schematic plan view of a production line of motor-vehicles using the system according to the invention.

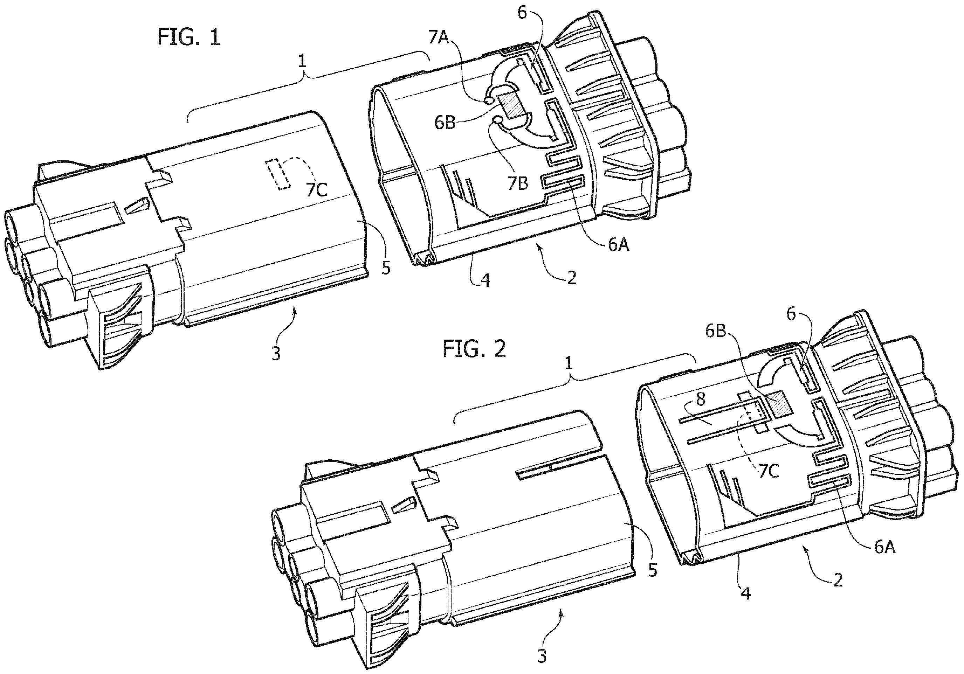

Figure 1 **relates to a first embodiment which does not form part of the invention, but whose description is useful for understanding the invention.**

**Figure 1** illustrates an electrical connector 1 comprising a first connector element 2 and a second connector element 3.

According to a conventional technique, the two connector elements 2, 3 have respective housings of plastic material 4, 5, carrying respective electrical contacts (not visible in the drawings), which can be mutually coupled together. The housings 4, 5 of the two connector elements 2, 3 are shaped with elements of mutual engagement of any known type, able to snap together elastically in the coupled condition.

In conventional electrical connectors, the correct coupling of the two connector elements must be manually detected by the operator, with a consequent loss of time and the risk of leaving the two connector elements in a non-perfectly coupled condition. In some cases, the click noise produced by the mutual engagement is used as a signal of correct coupling. In more elaborate and more expensive electrical connectors, a secondary locking member is provided, which is capable of being moved into a locking position only if the primary coupling elements have been correctly coupled.

As discussed above, in order to overcome these conventional solutions, it has already been proposed to enable a remote detection of the open or closed state of an electrical connector by using an RFID circuit. Radio frequency identification (RFID) circuits are widely used in industrial plants, both for their low cost and for the fact that they do not require an energy source. Due to its low cost, an RFID circuit csn be incorporated into an electrical connector without entailing any appreciable increase in the cost of the connector.

In the case of the present invention, an RFID circuit 6 is associated with the outer surface of the housing 4 of the first connector element 2. The RFID circuit 6 includes an antenna 6A and an integrated circuit 6B that is configured to receive a radio frequency signal sent by a reader device (not illustrated in Figure 1), by means of the antenna 6A, to process the signal by means of the integrated circuit 6B and to transmit an output signal by means of the antenna 6A.

A first important characteristic of the present invention lies in that the RFID circuit 6 is associated solely and entirely with the first connector element 2 and is, therefore, configured to always, and in any case, transmit an output signal through the antenna 6A when it receives an input signal, both whether the two connector elements 2, 3 are uncoupled, and whether the two connector elements 2, 3 are correctly and completely coupled.

An additional preferred characteristic of the RFID circuit 6 is that it is also configured to transmit, in addition to the information on the open or closed state of the electrical connector, an identification code of the electrical connector, each time the antenna 6A receives a signal sent by a reader device, both whether the two connector elements 2, 3 are coupled together, and whether the two connector elements 2, 3 are decoupled from each other.

According to the invention, the RFID circuit 6 comprises two pins 7A, 7B connected to the integrated circuit 6B, which is configured to send a current pulse to said pins, periodically or following a signal received by the antenna 6A, and to receive a response pulse which is different, depending on whether the two pins 7A, 7B are electrically connected to each other or not electrically connected to each other.

In the embodiment of Figure 1, **which does not form part of the invention,** the two pins 7A, 7B are not connected to each other when the two connector elements 2, 3 are decoupled. The housing 4 of the second connector element 3 carries an electrical connection element 7C on its inner surface, which acts as a connection bridge between the two pins 7A, 7B when the two connector elements 2, 3 are correctly and completely coupled together. The electrical connection element 7C is schematically illustrated in Figure 1. It may have any structure and configuration suitable for the purpose indicated herein.

Thanks to the arrangement described above, the RFID circuit 6 always and in any case transmits an output signal through the antenna 6A following receipt of an input signal, and this output signal contains a code that is different depending on whether the two pins 7A, 7B are electrically connected or are not electrically connected to each other, i.e. according to whether the two connector elements 2, 3 are correctly coupled to each other or are decoupled from each other.

The embodiment of Figure 2 **is made in accordance with the invention. This embodiment** differs from that of Figure 1 in that in this case no electrical connection elements are associated with the second connector element 3, which makes it possible to simplify the production of the second connector element. The first connector element 2 has a housing 4 including an elastic portion 8 (which in this example is constituted by an elastic tab), which carries an electrical connection bridge 7C on its inner surface, which normally electrically connects the two pins 7A, 7B together when the two connector elements 2, 3 are not coupled.

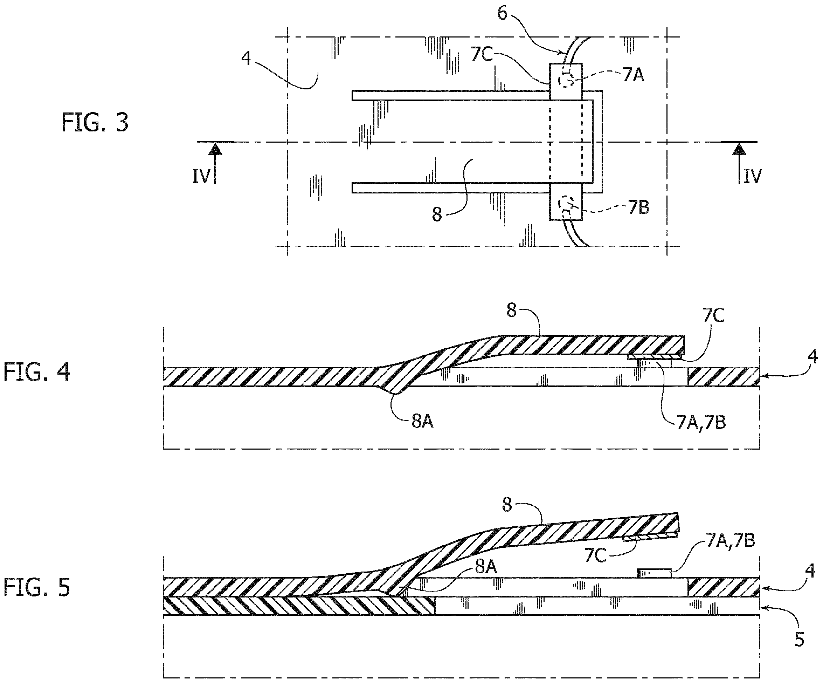

With reference also to Figures 3-5, in the embodiment schematically illustrated therein (which is provided herein purely by way of non-limiting example), the tab 8 of the housing 4 of the first connector element 2 has a protrusion 8A which is intercepted by a wall of the housing 5 of the second connector element 3 only when this is correctly and completely coupled with the first connector element 2. In this condition (Figure 5), the tab 8 deflects upwards (with reference to the Figure) and the electrical connection bridge 7C moves away from the two pins 7A, 7B. Therefore, in the correctly coupled condition of the two connector elements 2, 3, the two pins 7A, 7B are not electrically connected to each other. Also in this case the RFID circuit is able to respond always and in any case to an input signal at the antenna 6A by transmitting an output signal that contains a code representing the open or closed state of the electrical connector, and preferably also containing an identification code of the electrical connector.

Naturally, the specific configuration of the two connector elements of Figures 1, 2 has been illustrated purely by way of example. The invention is applicable to any type of electrical connector with any configuration of the connector elements 2, 3 and - in particular - with any configuration of the plastic housings 4, 5 and any configuration and arrangement of the electrical contacts carried by them.

The details relating to the specific configuration of the RFID circuit and - in particular - of the antenna 6A and of the integrated circuit 6B are not indicated herein, since they also can be made in any known way. The technology used to produce the RFID circuit can also be freely chosen among the known techniques in this field.

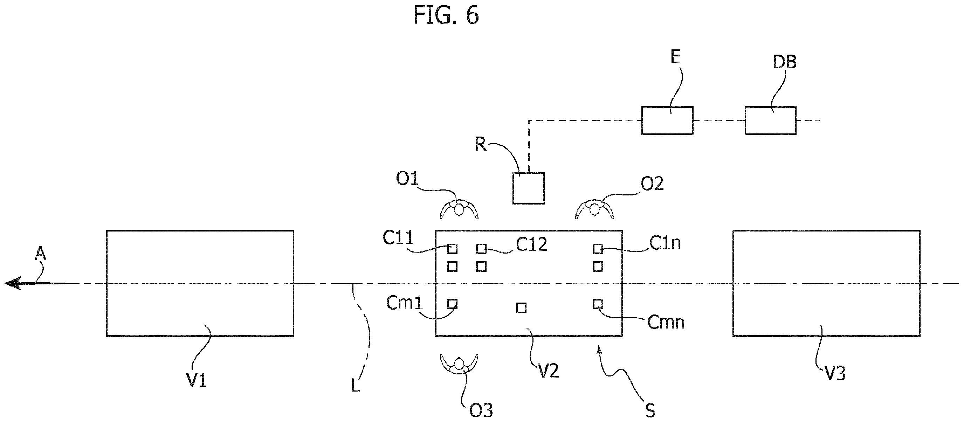

Figure 6 schematically illustrates a plan view of a production line L for motor-vehicles, wherein a plurality of motor-vehicle bodies V1, V2, V3 proceeds in a direction A. The reference S designates a station for the installation of a plurality of electrical connectors C11, C12,..., C1n, Cm1,...., Cmn. In the station S, operators O1, O2, O3 manually connect the two connector elements constituting each of the aforesaid electrical connectors. These electrical connectors are each made in accordance with the teachings of the present invention.

At the end of the cycle of manual operations performed in the station S, the state of the electrical connectors is detected by means of a reader device R, made according to any prior art, configured to send an interrogation signal to the antenna of the RFID circuit of each of the electrical connectors. According to the invention, the RFID circuits of all the electrical connectors respond to the interrogation signal by always sending a response signal containing the identification code of the electrical connector and an information on the open or closed state of the connector. The reader device R, therefore, always and in any case receives a response from each of the RFID circuits associated with the electrical connectors, whatever the state of the connector, and this is obtained by setting up a single RFID circuit on each connector.

Thanks to the characteristics indicated above, it is thus possible to remotely detect the status of a plurality of electrical connectors which are being installed in a production line, in a completely reliable way, without wasting time and without requiring any appreciable increase in the cost of the electrical connectors.

Naturally, without prejudice to the principle of the invention, the details of construction and the embodiments may vary widely with respect to those described and illustrated purely by way of example, without departing from the scope of the present invention.

## Claims

1. An electrical connector (1), comprising:
a first connector element (2) and a second connector element (3), having respective housings (4, 5) with respective electrical contacts, which can be mutually coupled together,
an RFID circuit (6) associated with the first connector element (2) and including an antenna (6A) and an integrated circuit (6B) configured to receive a signal through the antenna (6A), and to transmit an output signal indicative of an open state or a closed state of the electrical connector (1) corresponding, respectively, to an uncoupled condition and a correctly coupled condition of the two connector elements (2, 3),
wherein:
- the RFID circuit (6) is associated entirely and solely with said first connector element (2), so that said RFID circuit always, and in any case, transmits an output signal through said antenna (6A) upon receiving an input signal at said antenna (6A),
- the RFID circuit includes two pins (7A, 7B) connected to said integrated circuit (6B), the integrated circuit (6B) being configured so as to send a pulse of current to said two pins (7A, 7B), periodically or following a signal received from said antenna (6A), and to receive a response pulse, which is different depending on whether the two pins (7A, 7B) are electrically connected to each other or are electrically disconnected from each other,
- at least one of said connector elements (2, 3) is provided with an electrical connection element (7C) to electrically connect the two aforesaid pins (7A, 7B) of the RFID circuit (6) together, and
- said first and second connector elements (2, 3) are configured in such a way that in one of their two states of coupling and non-coupling, the aforesaid connection element (7C) electrically connects the two said pins (7A, 7B) to each other, while in the other of said two states, said connection element (7C) does not electrically connect said two pins (7A, 7B) to each other,
whereby said RFID circuit always and in any case transmits an output signal through said antenna (6A) upon receiving an input signal at said antenna (6A), and said output signal is different depending on whether said two pins (7A, 7B) are electrically connected to each other or are electrically disconnected from each other, so as to contain an information on the open or closed state of the connector, and
wherein said RFID circuit (6) is configured to transmit an output signal also containing an identification code of the electrical connector,
said electrical connector being **characterized in that** said electrical connection element (7C) is carried by an elastic portion (8) of the housing (4 of said first connector element (2), in such a way that the electrical connection element is normally in a position of electrical connection of said two pins (7A, 7B) when the two connector elements (2, 3) are decoupled, and
**in that** the housings (4, 5) of the two connector elements (2, 3) are configured in such a way that said elastic portion is moved away from its normal position connecting the two pins (7A, 7B) when the two connector elements (2, 3) are correctly coupled.

2. An electric connector according to claims 1, **characterized in that** said electrical connection element (7C) is associated with said second connector element (3), in such a way that when the two connector elements (2, 3) are correctly coupled to each other, said electrical connection element (7C) electrically connects together the two aforesaid pins (7A, 7B), while when the two connector elements (2, 3) are decoupled, said two pins (7A, 7B) are not electrically connected.

3. A system for checking the correct coupling of a plurality of electrical connectors in an assembly station (S) of a production line (L) of motor-vehicles (V1, V2, V3), comprising:
- an assembly station (S) along said production line (L), wherein a plurality of electrical connectors (C11, C12, C1n, Cm1, Cmn) are installed, each electrical connector being configured according to any of the preceding claims, and
- at least one reader unit (R) configured to send an input signal to the antenna (6A) of the RFID circuit (6) of each of said electrical connectors, and to receive a signal from the antenna (6A) of the RFID circuit (6) of each electrical connector containing an identification code of the electrical connector and an information on the open or closed state of the electrical connector.

4. A system according to claim 3, **characterized in that** with said at least one reader unit (R) there is associated an electronic processing unit (E) configured to store the information contained in the signals received by said at least one reader unit (R) in a database (DB), for subsequent processing.

5. A method for checking the correct coupling of a plurality of electrical connectors in an assembly station (S) of a production line (L) of motor-vehicles (V1, V2, V3), comprising:
- arranging an assembly station (S) along said production line (L), wherein a plurality of electrical connectors (C11, C12, C1n, Cm1, Cmn) are installed, each electrical connector being configured according to claim 1 or 2,
- sending an input signal - by means of at least one reader unit (R) - to the antenna (6A) of the RFID circuit (6) of each of said electrical connectors, and receiving a signal from the antenna (6A) of the RFID circuit (6) of each electrical connector, by means of said at least one reader unit (R), containing an identification code of the electrical connector and an information on the open or closed state of the electrical connector.

6. A method according to claim 5, **characterized in that** the information contained in the signals received by said at least one reader unit (R) is stored, by means of an electronic processing unit (E), in a database (DB), for subsequent processing.

## Patentansprüche

1. Elektrischer Verbinder (1), umfassend:
ein erstes Verbinderelement (2) und ein zweites Verbinderelement (3), die jeweilige Gehäuse (4, 5) mit jeweiligen elektrischen Kontakten aufweisen, die miteinander verbunden werden können,
einen RFID-Schaltkreis (6), der dem ersten Verbinderelement (2) zugeordnet ist und eine Antenne (6A) und eine integrierte Schaltung (6B) umfasst, die dazu eingerichtet ist, ein Signal mittels der Antenne (6A) zu empfangen und ein Ausgangssignal zu senden, das auf einen geöffneten Zustand oder einen geschlossenen Zustand des elektrischen Verbinders (1) hinweist, entsprechend einem unverbundenen Zustand beziehungsweise einem richtig verbundenen Zustand der zwei Verbinderelemente (2, 3),
wobei:
- der RFID-Schaltkreis (6) gänzlich und ausschließlich dem ersten Verbinderelement (2) zugeordnet ist, sodass der RFID-Schaltkreis stets und in jedem Fall bei Empfang eines Eingangssignals an der Antenne (6A) ein Ausgangssignal mittels der Antenne (6A) sendet,
- der RFID-Schaltkreis zwei Stifte (7A, 7B) umfasst, die mit der integrierten Schaltung (6B) verbunden sind, wobei die integrierte Schaltung (6B) dazu eingerichtet ist, periodisch oder im Anschluss an ein von der Antenne (6A) empfangenes Signal einen Stromimpuls an die zwei Stifte (7A, 7B) zu senden und einen Antwortimpuls zu empfangen, der sich in Abhängigkeit davon unterscheidet, ob die zwei Stifte (7A, 7B) miteinander elektrisch verbunden oder voneinander elektrisch getrennt sind,
- mindestens eines der Verbinderelemente (2, 3) mit einem elektrischen Verbindungselement (7C) versehen ist, um die zwei vorgenannten Stifte (7A, 7B) des RFID-Schaltkreises (6) miteinander elektrisch zu verbinden, und
- das erste und das zweite Verbinderelement (2, 3) derart eingerichtet sind, dass das vorgenannte Verbindungselement (7C) in einem ihrer zwei Zustände des Verbundenseins und des Nichtverbundenseins die zwei Stifte (7A, 7B) miteinander elektrisch verbindet, während das Verbindungselement (7C) in dem anderen der zwei Zustände die zwei Stifte (7A, 7B) nicht miteinander elektrisch verbindet,
wobei der RFID-Schaltkreis stets und in jedem Fall ein Ausgangssignal mittels der Antenne (6A) bei Empfang eines Eingangssignals an der Antenne (6A) sendet und sich das Ausgangssignal in Abhängigkeit davon unterscheidet, ob die zwei Stifte (7A, 7B) miteinander elektrisch verbunden oder voneinander elektrisch getrennt sind, um eine Information über den geöffneten oder geschlossenen Zustand des Verbinders zu enthalten, und
wobei der RFID-Schaltkreis (6) dazu eingerichtet ist, ein Ausgangssignal zu senden, das auch einen Kenncode des elektrischen Verbinders enthält,
wobei der elektrische Verbinder **dadurch gekennzeichnet ist, dass** das elektrische Verbindungselement (7C) derart von einem elastischen Abschnitt (8) des Gehäuses (4) des ersten Verbinderelements (2) getragen wird, dass sich das elektrische Verbindungselement normalerweise in einer Position der elektrischen Verbindung der zwei Stifte (7A, 7B) befindet, wenn die zwei Verbinderelemente (2, 3) getrennt sind, und
dadurch, dass die Gehäuse (4, 5) der zwei Verbinderelemente (2, 3) derart gestaltet sind, dass der elastische Abschnitt aus seiner normalen Position, in der die zwei Stifte (7A, 7B) verbunden sind, weg bewegt wird, wenn die zwei Verbinderelemente (2, 3) richtig verbunden sind.

2. Elektrischer Verbinder nach Anspruch 1, **dadurch gekennzeichnet, dass** das elektrische Verbindungselement (7C) dem zweiten Verbinderelement (3) derart zugeordnet ist, dass das elektrische Verbindungselement (7C), wenn die zwei Verbinderelemente (2, 3) richtig miteinander verbunden sind, die zwei vorgenannten Stifte (7A, 7B) elektrisch verbindet, während die zwei Stifte (7A, 7B) nicht elektrisch verbunden sind, wenn die zwei Verbinderelemente (2, 3) getrennt sind.

3. System zum Prüfen der richtigen Verbindung einer Vielzahl elektrischer Verbinder in einer Montagestation (S) einer Fertigungsstraße (L) für Kraftfahrzeuge (V1, V2, V3), umfassend:
- eine Montagestation (S) entlang der Fertigungsstraße (L), in der eine Vielzahl elektrischer Verbinder (C11, C12, C1n, Cm1, Cmn) installiert wird, wobei jeder elektrische Verbinder nach einem der vorhergehenden Ansprüche gestaltet ist, und
- mindestens eine Leseeinheit (R), die dazu eingerichtet ist, ein Eingangssignal an die Antenne (6A) des RFID-Schaltkreises (6) von jedem der elektrischen Verbinder zu senden und von der Antenne (6A) des RFID-Schaltkreises (6) von jedem elektrischen Verbinder ein Signal zu empfangen, das einen Kenncode des elektrischen Verbinders und eine Information über den geöffneten oder geschlossenen Zustand des elektrischen Verbinders enthält.

4. System nach Anspruch 3, **dadurch gekennzeichnet, dass** der mindestens einen Leseeinheit (R) eine elektronische Verarbeitungseinheit (E) zugeordnet ist, die dazu eingerichtet ist, die Information, die in den von der mindestens einen Leseeinheit (R) empfangenen Signalen enthaltene Information für die nachfolgende Verarbeitung in einer Datenbank (DB) zu speichern.

5. Verfahren zum Prüfen der richtigen Verbindung einer Vielzahl elektrischer Verbinder in einer Montagestation (S) einer Fertigungsstraße (L) für Kraftfahrzeuge (V1, V2, V3), umfassend:
- Einrichten einer Montagestation (S) entlang der Fertigungsstraße (L), in der eine Vielzahl elektrischer Verbinder (C11, C12, C1n, Cm1, Cmn) installiert wird, wobei jeder elektrische Verbinder nach Anspruch 1 oder 2 gestaltet ist,
- Senden eines Eingangssignals mithilfe mindestens einer Leseeinheit (R) an die Antenne (6A) des RFID-Schaltkreises (6) von jedem der elektrischen Verbinder und Empfangen eines Signals von der Antenne (6A) des RFID-Schaltkreises (6) von jedem elektrischen Verbinder mithilfe der mindestens einen Leseeinheit (R), das einen Kenncode des elektrischen Verbinders und eine Information über den geöffneten oder geschlossenen Zustand des elektrischen Verbinders enthält.

6. Verfahren nach Anspruch 5, **dadurch gekennzeichnet, dass** die Information, die in den von der mindestens einen Leseeinheit (R) empfangenen Signalen enthalten ist, mithilfe einer elektronischen Verarbeitungseinheit (E) für die nachfolgende Verarbeitung in einer Datenbank (DB) gespeichert wird.

## Revendications

1. Connecteur électrique (1), comprenant :
un premier élément de connecteur (2) et un deuxième élément de connecteur (3), ayant des boîtiers respectifs (4, 5) avec des contacts électriques respectifs, qui peuvent être mutuellement couplés ensemble,
un circuit RFID (6) associé au premier élément de connecteur (2) et comprenant une antenne (6A) et un circuit intégré (6B) configuré pour recevoir un signal à travers l'antenne (6A), et pour transmettre un signal de sortie indicatif d'un état ouvert ou d'un état fermé du connecteur électrique (1) correspondant, respectivement, à un état découplé et à un état correctement couplé des deux éléments de connecteur (2, 3),
dans lequel :
- le circuit RFID (6) est associé entièrement et uniquement audit premier élément de connecteur (2), de sorte que ledit circuit RFID transmette toujours et dans tous les cas un signal de sortie à travers ladite antenne (6A) lors de la réception d'un signal d'entrée au niveau de ladite antenne (6A),
- le circuit RFID comprend deux broches (7A, 7B) connectées audit circuit intégré (6B), le circuit intégré (6B) étant configuré de manière à envoyer une impulsion de courant auxdites deux broches (7A, 7B), périodiquement ou à la suite d'un signal reçu de ladite antenne (6A), et pour recevoir une impulsion de réponse, qui est différente selon que les deux broches (7A, 7B) sont électriquement connectées l'une à l'autre ou sont électriquement déconnectées l'une de l'autre,
- au moins un desdits éléments de connecteur (2, 3) est pourvu d'un élément de connexion électrique (7C) pour connecter électriquement les deux broches (7A, 7B) précitées du circuit RFID (6) ensemble, et
- lesdits premier et deuxième éléments de connecteur (2, 3) sont configurés de sorte que dans l'un de leurs deux états de couplage et de non couplage, l'élément de connexion (7C) précité connecte électriquement lesdites deux broches (7A, 7B) l'une à l'autre, tandis que dans l'autre desdits deux états, ledit élément de connexion (7C) ne connecte pas électriquement lesdites deux broches (7A, 7B) l'une à l'autre,
moyennant quoi ledit circuit RFID transmet toujours et dans tous les cas un signal de sortie à travers ladite antenne (6A) lors de la réception d'un signal d'entrée au niveau de ladite antenne (6A), et ledit signal de sortie est différent selon que lesdites deux broches (7A, 7B) sont électriquement connectées l'une à l'autre ou sont électriquement déconnectées l'une de l'autre, de manière à contenir une information sur l'état ouvert ou fermé du connecteur, et
dans lequel ledit circuit RFID (6) est configuré pour transmettre un signal de sortie contenant également un code d'identification du connecteur électrique,
ledit connecteur électrique étant **caractérisé en ce que** ledit élément de connexion électrique (7C) est porté par une partie élastique (8) du boîtier (4) dudit premier élément de connecteur (2), de sorte que l'élément de connexion électrique soit normalement dans une position de connexion électrique desdites deux broches (7A, 7B) lorsque les deux éléments de connecteur (2, 3) sont découplés, et
**en ce que** les boîtiers (4, 5) des deux éléments de connecteur (2, 3) sont configurés de sorte que ladite partie élastique soit écartée de sa position normale connectant les deux broches (7A, 7B) lorsque les deux éléments de connecteur (2, 3) sont correctement couplés.

2. Connecteur électrique selon la revendication 1, **caractérisé en ce que** ledit élément de connexion électrique (7C) est associé audit deuxième élément de connecteur (3), de sorte que lorsque les deux éléments de connecteur (2, 3) sont correctement couplés l'un à l'autre, ledit élément de connexion électrique (7C) connecte électriquement l'une à l'autre les deux broches (7A, 7B) précitées, tandis que lorsque les deux éléments de connecteur (2, 3) sont découplés, lesdites deux broches (7A, 7B) ne sont pas connectées électriquement.

3. Système de vérification du couplage correct d'une pluralité de connecteurs électriques dans un poste d'assemblage (S) d'une ligne de production (L) de véhicules automobiles (V1, V2, V3), comprenant :
- un poste d'assemblage (S) le long de ladite ligne de production (L), dans lequel une pluralité de connecteurs électriques (C11, C12, C1n, Cm1, Cmn) sont installés, chaque connecteur électrique étant configuré selon l'une des revendications précédentes, et
- au moins une unité de lecture (R) configurée pour envoyer un signal d'entrée à l'antenne (6A) du circuit RFID (6) de chacun desdits connecteurs électriques, et pour recevoir un signal de l'antenne (6A) du circuit RFID (6) de chaque connecteur électrique contenant un code d'identification du connecteur électrique et une information sur l'état ouvert ou fermé du connecteur électrique.

4. Système selon la revendication 3, **caractérisé en ce qu'**à ladite au moins une unité de lecture (R) est associée une unité de traitement électronique (E) configurée pour stocker les informations contenues dans les signaux reçus par ladite au moins une unité de lecture (R) dans une base de données (DB), pour un traitement ultérieur.

5. Procédé de vérification du couplage correct d'une pluralité de connecteurs électriques dans un poste d'assemblage (S) d'une ligne de production (L) de véhicules automobiles (V1, V2, V3), comprenant :
- l'agencement d'un poste d'assemblage (S) le long de ladite ligne de production (L), dans lequel une pluralité de connecteurs électriques (C11, C12, C1n, Cm1, Cmn) sont installés, chaque connecteur électrique étant configuré selon la revendication 1 ou 2,
- l'envoi d'un signal d'entrée - au moyen d'au moins une unité de lecture (R) - à l'antenne (6A) du circuit RFID (6) de chacun desdits connecteurs électriques, et la réception d'un signal de l'antenne (6A) du circuit RFID (6) de chaque connecteur électrique, au moyen de ladite au moins une unité de lecture (R), contenant un code d'identification du connecteur électrique et une information sur l'état ouvert ou fermé du connecteur électrique.

6. Procédé selon la revendication 5, **caractérisé en ce que** les informations contenues dans les signaux reçus par ladite au moins une unité de lecture (R) sont stockées, au moyen d'une unité de traitement électronique (E), dans une base de données (DB), pour un traitement ultérieur.
